(19) Europäisches Patentamt

European Patent Office

Office européen des brevets

(11) Publication number: **0 210 310 B1**

(12) **EUROPEAN PATENT SPECIFICATION**

(45) Date of publication of patent specification: **04.03.92**   (51) Int. Cl.⁵: **H05B 41/29**

(21) Application number: **85305360.1**

(22) Date of filing: **26.07.85**

(54) **Gain controlled electronic ballast system.**

| | |
|---|---|
| (43) Date of publication of application: **04.02.87 Bulletin 87/06** | (73) Proprietor: **INTENT PATENTS A.G.** **Auelestrasse 38** **FL-9490 Vaduz(LI)** |
| (45) Publication of the grant of the patent: **04.03.92 Bulletin 92/10** | (72) Inventor: **Hanlet, Jacques Marie** **3800 Learwood Drive** **Loxahatchee Florida 33470(US)** |
| (84) Designated Contracting States: **AT BE CH DE FR GB IT LI LU NL SE** | |
| (56) References cited: **GB-A- 2 120 873** **US-A- 4 503 362** | (74) Representative: **Lambert, Hugh Richmond et al** **D. YOUNG & CO. 10 Staple Inn** **London, WC1V 7RD(GB)** |

Rank Xerox (UK) Business Services

## Description

This invention is directed to electronic ballast systems for gas discharge tubes, such as fluorescent tubes.

Electronic ballast systems for gas discharge tubes are known in the art. However, in some prior art electronic ballast systems, no provision is made for frequency stabilization of the circuit. Thus, in such prior art electronic ballast systems, when a gas discharge tube is removed from the circuit, there is deleterious flickering of the remaining gas discharge tube or in some cases, a complete breakdown of the visible light from the remaining gas discharge tubes.

In other prior art electronic ballast systems, the light output of the gas discharge tubes are highly dependent upon the gain of the transistors used in the circuit. In such prior art systems where the transistor gains between one unit and another vary over a large value, the light output from the gas discharge tubes fluctuates by large amounts. Thus, in such prior art systems, additional circuitry must be added to maintain the light output fluctuation as constant as possible between differing units.

The present invention is concerned more particularly with a gain-controlled electronic ballast system for a gas discharge tube, of the type comprising: filter means connectable to a power source to provide a smoothed DC voltage; a transformer having an autotransformer winding having an input tap and an output tap connectable to the gas discharge tube; controllable switching means for applying the DC supply voltage to the input tap of the autotransformer winding; and a control circuit for controlling the switching means to apply the DC supply voltage to the input tap at a predetermined frequency with breaking of the application of the DC supply voltage being at a rapid rate so that the autotransformer winding acts as a induction coil.

Such a type of system is known from US-A-4503362. In this known system, the frequency stabilising control circuit circuit comprises a separate transformer having a first winding connected in series with the autotransformer winding, a second winding in which a control current for the switching means is induced, and a third winding across which an oscillation control capacitor is connected to form a resonant circuit for creating a stable frequency of operation. This is a complicated circuit which requires the provision of a frequency control transformer.

The present invention is characterised in that the control circuit includes a secondary winding of the main transformer, in which a current is induced to control the switching means. The oscillation frequency is determined by the inductance characteristics of the main transformer, and a separate frequency control transformer is not required.

It is known from GB-A-2120873 to induce a current in a secondary winding of a main transformer of a ballast circuit to control a switching transistor. However, the transformer in this known circuit does not have an autotransformer winding acting as an induction coil, but rather operates with a basic transformer action having an essentially sinusoidal voltage arising across the primary winding.

Specific embodiments of the present invention will now be described by way of example with reference to the accompanying drawings in which:

FIG. 1 is an electrical schematic drawing of one embodiment of current driven gain controlled electronic ballast system; and,

FIG. 2 is an electrical schematic drawing of another embodiment of the gain controlled electronic ballast system.

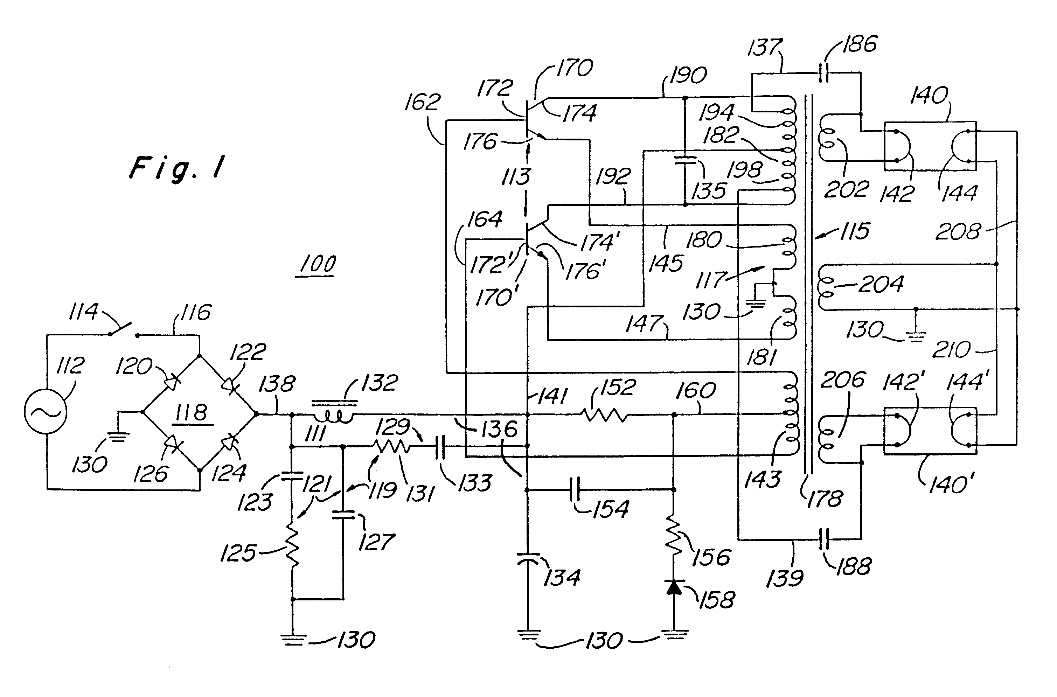

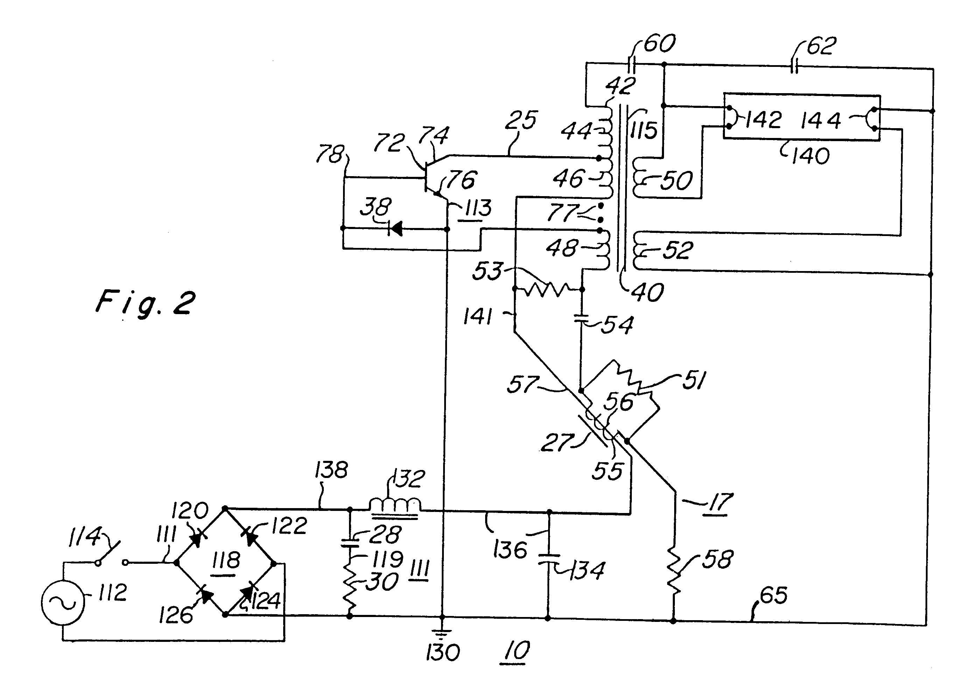

Referring now to FIGS. 1 and 2, there is shown current driven automatic gain controlled ballast system 100, and self-regulating electronic ballast system 10, respectively. Thus there is shown electronic ballast systems 10 and 100 having power source 112 for actuation of at least one of a pair of gas discharge tubes 140 and 140'. Gas discharge tubes 140 and 140' may be of a standard fluorescent type system having first and second filaments 142, 144, and 142' and 144', as is shown.

Power source 112 may be 210 to 240 volt, 50 hz. AC power source for the embodiments herein described with the understanding that a particular power source designation is used for illustrative purposes only, and may be an AC power source of any standardized voltage generated at frequencies approximating 50.0 or 60.0 hz.

In broader concept, power source 112 may be a DC power electrical source applied internal or external to systems 100 and 10 in a manner well known in the art by removal of predetermined portions of the overall circuitry. Power for systems 10 and 100 is supplied by power source 112 to switch 114 which may be a commercially available standardized switch element such as a single pole, single throw switch mechanism.

Power is input through power line 116 to rectification circuit 118 which provides for a full wave rectification of the power source AC voltage. Rectification circuit 118 may be a full wave bridge circuit, as shown in the figures. Full wave bridge circuit 118 is formed by diode elements 120, 122, 124 and 126 for providing rectification of AC voltage from power source 112. In the embodiments shown, diode elements 120-126 may be one of a number of standard diode elements, and in one form of ballast systems 10 and 100, have standardized designation of 1N4005.

Bridge circuit 118 provides an output pulsating DC voltage signal passing on output line 138, which pulsating signal is applied to filter network 111. Filter network 111 filters the aforementioned pulsating DC voltage passing from rectification circuit 118. Filter network 111 is electrically coupled to bridge circuit 118 by output line 138.

In order to provide for a substantially continuous smooth signal for operation of systems 100 and 10, filter circuit 111 includes smoothing filter 136 used for averaging the pulsating DC voltage signal. Rectification bridge circuit 118 is coupled to ground 130 in order to be the return path for the DC supply for opposing ends of bridge circuit 118, providing DC power input to filter network 111.

Smoothing filter 136 of filter network 111 includes choke element 132 and shunt capacitor 134. Choke element 132 is coupled on a first end in series relation to rectification circuit 118 and is additionally coupled to shunt capacitor 134 on an opposing end. Shunt capacitor 134 is connected in parallel relation with the overall output of filter network 111, as is shown. Shunt capacitor 134 is coupled on a first end to choke element 132 and to filter output line 141, as well as being coupled on an opposing end to DC return 65 in FIG. 2 and ground 130 in FIG. 1.

In combination, shunt capacitor 134 with choke element 132 functions to substantially average out the 100.0 Hz pulsating DC voltage supplied by full wave bridge circuit 118. The combination of shunt capacitor 134 and choke element 132 additionally maintains the current drawn by systems 100 and 10 at an average value without creating an overall power factor which would be deleteriously leading or in the alternative, lagging. Such deleterious lead or lag of the power factor may be found where large inductances were used in the overall circuit, when a large capacitance is used as the sole filtering mechanism for smoothing the pulsating DC voltage generated.

It is to be noted that in the event choke or series inductor element 132 were deleted from ballast system 100, shunt capacitor 134 would thus draw an increased current. This increased current is commonly referred to as a surge current and would be evident on each cycle as capacitor 134 began charging. Through the incorporation of series inductor 132, inductance 132 stores energy during each cycle to supply current for initial charging of shunt capacitor 134 which thus provides the smooth average current as seen by power source 112.

Filter network 111 which is coupled to power source 112 includes correction circuit 119. Correction circuit 119 is an electrical network where the elements have predetermined values selected in a manner to allow tuning of the network in order to substantially reduce harmonic oscillations which might otherwise be coupled back to power source 112. The tuning of correction circuit 119 is designed in a manner to provide significant reduction in the amplitude of the first five harmonic frequencies coupled into the DC supply of electronic ballast systems 10 and 100. It has been found that harmonic frequencies which are multiples of the initial five harmonic frequencies are similarly reduced, as is typical in filters of this type.

Referring now specifically to the embodiment shown in Figure 1, first capacitor 123 may be approximately a 1.0 microfarad, 350.0 volt Mylar type capacitor. Second capacitor 127 may be a 0.5 microfarad, 350.0 volt Mylar type element with first series resistor 125 having an approximate value designation of 82.0 ohms, 1.0 watt resistor.

Additionally, correction circuit 119 further includes second RC circuit 129 having second capacitor 133 coupled in series relation to second resistor 131. Series combination of second capacitor 133 and second resistor 131 is connected in parallel relation to series inductor or choke element 132 in order to provide a low impedance path for any harmonic frequencies to first RC circuit 119 which creates a low impedance path to ground 130.

A current signal passing through power input line 141 responsive to actuation of power source 112 is inserted to bias resistor 152 as well as bias capacitor 154. Bias resistor 152 and bias capacitor 154 are connected in parallel relation each with respect to the other. The combination of bias resistor 152 and bias capacitor 154 are coupled to center tap line 160 of trigger control winding 143 of inverter transformer 178. As can be seen, trigger control winding 143 is coupled to both filter network 111 and switching circuit 113.

Center tap line 160 provides a center tap to trigger control winding 143 and establishes a switching control signal having opposing polarity when taken with respect to the center tap. Bias resistor 152 and bias capacitor 154 are used to establish a bias voltage for initiation of an oscillation when electronic ballast system 100 is initially energized.

In the embodiment herein described, bias resistor 152 has a value approximating $220.0 \times 10^3$ ohms and bias capacitor 154 may have an approximate value of 1.0 microfarads.

Current limiting resistor 156 and blocking diode 158 are connected in series combination and are coupled to center tap line 160. The series combination of current limiting resistor 156 and blocking diode element 158 provides for return to ground 130 for the trigger signal generated in trigger control winding 143 when electronic ballast system 100 has passed into an oscillation phase.

Although not important to the inventive concept as herein described, but provided for illustrative purposes, current limiting resistor 156 may have a value approximating 15.0 ohms with a dissipation range of approximately 1.0 watts. Blocking diode 158 may be a commercially available element having a common designation 1N4001, and is coupled to a first end of current limiting resistor 156 and on an opposing end to ground 130.

Current driven gain controlled electronic ballast system 100 includes switching network 113 which is coupled to induction network 115. Switching network 113 includes a pair of transistors 170 and 170' connected in feedback relation to trigger control winding 143. Such coupling of transistors 170 and 170' to trigger control winding 143 allows switching a current signal responsive to a trigger signal produced.

Current enters trigger control winding 143 on center tap line 160, is divided and flows through both first transistor line 162 and second transistor line 164 to bases 172 and 172' of transistors 170 and 170'. First and second transistors 170 and 170' may be of the NPN type which are commonly commercially available, and may have a designation of MJE135005.

In general, due to manufacturing considerations, one of first and second transistors 170 and 170' will have a higher gain than the other. Thus, the transistor 170 or 170' having the higher gain will be turned "on" or to a conducting state first. When either of first or second transistors 170 or 170' goes into a conducting mode, the other transistor 170 or 170' is held in a non-conducting state for the time interval during which the other transistor 170 or 170' is in the conducting or "on" state.

Assuming that second transistor 170' enters a conducting state, the voltage level of second transistor collector 174' is then brought into the neighborhood of second transistor emitter 176' within approximately 1.0 volts.

As is seen in the schematic of FIG. 1, emitter element 176' is electrically coupled to inverter transformer gain control secondary winding 181. Transformer gain control secondary winding 181 is also coupled to ground 130. Thus, the current path for the base drive current is completed. Additionally, emitter element 176 of first transistor 170 is coupled to inverter transformer gain control secondary winding 180 which in a similar fashion as the case of secondary winding 181, is coupled to ground 130.

Induction circuitry 115 includes inverter transformer 178 which is connected to switching network 113 as has been previously described. Inverter transformer 178 includes a multi-tap primary winding 182, as well as a multiplicity of secondary windings 202, 204, 206, trigger control winding 143, and inverter transformer gain control secondary windings 180 and 181. A pair of coupling capacitors 186 and 188 are coupled in series relation to a respective tap of primary winding 182, as well as gas discharge tubes 140 and 140'. Opposing ends of primary winding 182 are coupled to respective collector elements 174 and 174' of transistors 170 and 170' through lines 190 and 192.

Further included in induction circuit 115 is tuning capacitor 135 which is connected in parallel relation to the primary winding 182. Tuning capacitor 135 is connected between collector elements 174 and 174' of transistors 170 and 170' for protection of transistors 170 and 170' from excessive high voltages which may be produced if one of gas discharge tubes 140 and 140' are electrically removed from the ballast system 100. Tuning capacitor 135 changes the oscillation frequency in the event that one of gas discharge tubes 140 or 140' is removed from the circuit 100. In this event, a lower voltage is induced in primary winding 182 which thus prevents damage to transistor elements 170 or 170'.

As will be described in following paragraphs, primary winding 182 of inverter transformer 178 is tapped in a manner to provide an auto-transformer configuration. Particularly, inverter transformer primary winding 182 is tapped by high voltage output line 137 and high voltage output line 139 on respective opposing ends of primary winding 182. With center tap line 141 referencing the primary winding 182 to the DC power supply, a step down auto-transformer configuration is provided in each half of primary winding 182. Each half of primary winding 182 then functions as a primary winding on alternate half cycles of the oscillation produced.

Electronic ballast system 100 is current driven, which is in contradistinction to some prior art ballast systems where the saturating transformer is driven by the magnitude of a feedback voltage. In ballast system 100, during one half of the overall cycle, the collector current of first transistor 170 is in a feedback mode with inverter transformer 178.

Current flows from power source 112 through center tap line 141 and then through one half of primary winding 182 to transistor collector line 190 and finally to collector element 174 of transistor 170. Current passing through one half of primary winding 182 induces a voltage in trigger winding 143 which generates a base drive voltage. The base drive voltage is fed to base element 172 through line 162 which further reinforces the turning "on" of transistor 170. Base and collector currents pass through emitter elements 176 through line 145 and then through gain control winding 180 and to ground 130.

In a similar manner, during alternate half cycles, collector current of second transistor 170' is in feedback coupling to inverter transformer 178 where again current flowing from the power source to center tap line 141 flows through the other half of primary winding 182 and then into collector line 192 and to collector element 174'.

This current flow in the alternate half cycle induces a voltage in trigger control winding 143 which has a polarity opposite to that which was generated in the previous half cycle due to the flow direction of the current in primary winding 182. Such flows through line 164 to base element 172' and then both base and collector currents flow through emitter element 176' through line 147 to gain control winding 181 and then to ground 130.

After oscillation begins, both base voltages induced in gain control windings 180 and 181 are negative with respect to ground 130. However, the base voltage for the transistor 170 or 170' whichever is in the "on" state is less negative than its respective emitter voltage and therefore, properly biased. This bias voltage is predetermined by the difference in turns in the respective windings 180 or 181 and 143 and therefore maintains a constant difference in potential which may occur between base 172 or 172' and emitter 176 or 176', respectively.

Collector current which flows through inverter transformer primary winding 182 during each half cycle generates a magnetic flux and induces voltages in all of the secondary windings of inverter transformer 178 while the current is increasing towards its steady state value. As the current approaches its maximum value its rate of change diminishes and thus the induced secondary voltages are correspondingly reduced. When the steady state current is reached, no transformer action takes place, and the transistor 170 or 170' which was in the "on" state no longer receives a base drive signal from trigger control winding 143 and therefore turns "off".

This sequence of events terminates the current from flowing in primary winding 182 which has the effect of reversing the direction of the magnetic flux. Thus there is induced an opposite polarity voltage in trigger control winding 143 turning the transistor 170 or 170' into an "on" state if such was previously in the "off" state.

A current is responsively driven in the opposite direction through primary winding 182 and induces a trigger base drive signal. Once again, the collector current reaches a steady state value and the transformer action terminates and there is provided a repetitive process of oscillation whose frequency is determined by the inductance characteristics of inverter transformer 178. In this manner, the frequency of oscillation is determined by the characteristics of the core, the number of turns of the primary winding 182, and the current flowing through primary winding 182. Thus, the oscillation frequency is much less dependent on supply voltage than that which is known in prior art systems and produces a visible light output from discharge tubes 140 and 140' which is substantially constant in having minimal flicker even with large variations in supply voltage.

As is known in classical transistor theory, the emitter current of a transistor is the combination of the base current and the collector current. In the operation of ballast system 100, the base current component of the emitter current, with reference to transistor 170 when it is in the "on" state, flows from ground 130 into blocking diode 158 and through current limiting resistor 156 into tap line 160. Current flows through half of the winding of trigger control winding 143 to line 162 into base 172 and then through transistor emitter 176 into inverter transformer gain control secondary winding 180 and then to ground 130.

During a next consecutive half cycle, when second transistor 170' is in the "on" state, base current flows from ground 130 through blocking diode 158 and then through current limiting resistor 156 into center tap line 160 and trigger control winding 143.

Current in trigger control winding 143 then passes through line 164 to base 172' of second transistor 170' and through base emitter junction 172', 176' to second inverter transformer gain control winding 181 and then to ground 130. A complete path for the base current is thus established during each half cycle when system 100 is in oscillation.

Current driven automatic gain controlled ballast system 100 provides for a unique method of achieving gain control without the requirement for matching of transistors or the adjustment of gains with external components. Ballast system 100 includes automatic gain controlled circuitry 117 which has a pair of windings 180 and 181 which are secondary windings of inverter transformer 178.

Inverter transformer gain control secondary windings 180 and 181 are coupled to emitter elements 176 and 176' of first and second transistors 170 and 170', respectively, as is shown in FIG. 1.

As will be detailed in following paragraphs, secondary windings 180 and 181 of automatic gain controlled circuit 117 are wound in a predetermined manner which is in the same direction as the primary winding 182, to provide a negative feedback voltage to each of emitter elements 176 and 176' of first and second transistors 170 and 170'. When collector current flows through first section 194 of primary winding 182, an induced voltage is generated in first inverter transformer gain control secondary winding 180 and is phased in a manner such that winding 180 negatively biases emitter 176 of first transistor 170 with respect to ground 130 to provide a negative feedback from first transistor 170.

A reference feedback voltage is provided which is proportional to the current drawn through first section 194 of primary winding 182 and is the collector current of first transistor 170. Similarly, on alternate half cycles, the collector current of second transistor 170' flows to second section 198 of primary winding 182 which provides negative feedback for second transistor 170'.

Due to the fact that collector currents of first and second transistors 170 and 170' are a function of the base current and the gain of the respective transistors 170 or 170', and assuming that the base current of each transistor 170 or 170' are substantially equal, the difference in collector currents is proportional to the gain of each of transistors 170 and 170'.

By providing negative feedback voltage proportional to the collector current, the gain of each transistor 170 and 170' may be regulated to a predetermined value. Since the negative feedback limits the gain of each transistor 170 or 170' to a predetermined value which is less than the minimum gain of the transistor 170 or 170' as specified by the manufacturer, the gain of each transistor 170 or 170' as seen by the circuit, will be substantially the same.

Referring to the gain control, it is to be understood that the emitter currents flowing through gain control windings 180 and 181 effect the magnetization field within the core of inverter transformer 178. Obviously, this effect will either be additive or subtractive thus influencing the base drive voltage induced in trigger winding 143 by shifting the operating point on the hysteresis curve for the core material of inverter transformer 178. Thus, in the event that the transistor gain is above a desired value, the operating point on the hysteresis curve will decrease, resulting in a decrease of the base drive voltage induced in winding 143. In opposition, if the transistor gain is less than the desired value, the collector and emitter currents will be reduced and the operating point on the hysteresis curve will increase simultaneously increasing the base drive voltage in order to regulate system operation.

The base current flowing through current limiting resistor 156 and center tap line 160 follows a symmetrical path through each of the transistor circuits and therefore, the base currents for all intents and purposes, will be substantially identical, and since the gain is held at a predetermined value, the collector currents will also be substantially identical.

The apparent transistor gain will be substantially the same for both transistors 170 and 170'. Additionally, the transistor gain is automatically controlled by the negative feedback generated in first inverter transformer gain control secondary winding 180 and second inverter gain control winding 181.

During the "off" time, both the base voltages and the emitter feedback voltage are positive with respect to ground potential, however, the difference in voltage between them is such that the bases 172 or 172' is biased negatively by approximately 2.5 volts with respect to its corresponding emitter 176 or 176'. This provides for a fast fall time and a short storage time, and therefore, a low dissipation is provided in transistors 170 and 170'. As the DC voltage applied to power line 141 increases with an increase in input AC voltage from power source 112, both of the base voltages and the emitter feedback voltage increase in magnitude, however, their relative difference remains constant at approximately 0.7 volts for the particular transistors and power output herein described.

Referring now in detail to inverter transformer 178, current flows through primary section 198 into collector 174' of transistor 170' which for the purposes of this current description, is in a conducting state. When switching takes place, transistor 170' goes to an "off" condition, or non-conducting state, which then causes a rapid change in current and produces a high voltage in primary section 198. The high voltage is then seen at second coupling capacitor 188 which is coupled by line 139 to primary section 198.

In a similar manner, a high voltage having opposing polarity is induced in primary section 194 similar to the voltage value of primary section 198. This is applied to gas discharge tube 140 and to first coupling capacitor 186 which is connected to first section 194 by coupling or tapping line 137.

Voltage induced in first section 194 of primary winding 182 when first transistor 170 is switched to an "off" state, is substantially equal in magnitude, but opposite in polarity, to that induced in second section 198 of primary winding 182 when second transistor 170' is switched to an "off" state.

Thus, an alternating voltage is generated at the predetermined frequency established by the saturation of inverter transformer 178. In a similar manner, the voltage induced in second section 198 of primary winding 182 is also alternating at the predetermined frequency and approximately 180° out-of-phase with a voltage generated in first section 194 of primary winding 182. This is due to the fact that each winding is on opposite sides of the center tap, and only one transistor 170 or 170' is in an "on" or "off" state during one time interval.

First and second coupling capacitors 186 and 188 are coupled to respective taps on inverter transformer primary winding 182 of inverter transformer 178. Capacitors 186 and 188 are also coupled to first filaments 142 and 142' of gas discharge tubes 140 and 140', respectively for discharging the induced voltage signal.

Secondary filament heater windings 202 and 206 are coupled in series relation to each of the first and second coupling capacitors 186 and 188 for discharging the induced voltage in primary sections 194 and 198 of primary windings 182 into gas discharge tubes 140 and 140'. As is clearly seen, secondary filament heater windings 202 and 204 of inverter transformer 178 are coupled to filaments 142 and 144 of gas dsicharge tube 140. In like manner, secondary filament heater windings 204 and 206 of inverter transformer 178 heat filaments 144' and 142' of gas discharge tube 140'.

The induced voltage which is discharged in fluorescent tubes 140 and 140' cause a current to flow from filaments 142 and 142' to filaments 144 and 144', respectively. Both filaments 144 and 144' are coupled to ground 130 through filament lead 208. Second filaments 144 and 144' of gas discharge tubes 140 and 140' are coupled in parallel each to the other through lines 208 and 210.

Secondary filament heater winding 204 is connected in parallel relation to both second filaments 144 and 144' of gas discharge tubes 140 and 140'. Similarly, filament heater secondary windings 202 and 206 are connected in parallel to first filaments 142 and 142', respectively. Thus, first filaments 142 and 142' are heated by filament heater windings 202 and 206 and second filaments 144 and 144' share heater current from heater filament secondary winding 204 which is coupled to ground 130 to provide a current path for the induced discharge current.

Referring now to the self-regulating electronic ballast system 10 of FIG. 2, there is shown harmonic filter circuit 119 which includes harmonic filter capacitor 28 which is coupled in series relation to harmonic filter resistor 30. Harmonic filter capacitor 28 is connected on a first end to power output line 138 and on the opposing end to harmonic filter resistor 30. Harmonic filter resistor 30 is connected on its first end to filter capacitor 28 and on the opposing end to return line 130. Thus, harmonic filter circuit 119 has harmonic filter capacitor 28 connected in series relation to harmonic filter resistor 30 and the series combination is connected in shunt relation to bridge circuit 118.

In the embodiment shown in FIG. 2, harmonic filter capacitor 28 is approximately 1.0 microfarad, 400.0 volt Mylar type capacitor, and harmonic filter resistor 30 is approximately a 240.0 ohm 2.0 watt resistor.

Self-regulation control circuitry 17 is coupled between return line 130 and inverter network 115. Self-regulation control circuitry 17 includes first capacitor 54, toroid transformer 56, and current limiting resistor 58. Current limiting resistor 58 is coupled on a first end to return line 65 and on a second end to first winding 55 of toroid transformer 56. First winding 55 of toroid transformer 56 is coupled on a first end to current limiting resistor 58 and on a second end to base coupling capacitor 54. Base coupling capacitor 54 is coupled on one end to first winding 55 of toroid transformer 56 and on the opposing end to base driving winding 48 of induction circuit 115.

Although not important to the inventive concept as herein described, current limiting or damping resistor 58 may have a value approximating 2.0 - 3.0 ohms and having a dissipation rating of approximately 0.25 watts. Toroid transformer 56 may have a first winding 55 with 16 turns of number 28 wire, a second winding 57 of a single turn formed by DC power input or filter output line 141 passing through the axis of the toroid core. Base coupling capacitor 54 may be a 0.15 microfarad, 100.0 volt Mylar type capacitor.

The series combination of current limiting resistor 58, first winding 55 of toroid transformer 56, and base coupling capacitor 54 provides for return paths for the base drive signal of switching circuit 113 subsequent to self-regulating electronic ballast system 10 going into an oscillation phase.

Self-regulating electronic ballast system 10 further includes switching network 113 which is feedback coupled to induction circuitry 115 for establishing a regulated current. As will be seen in following paragraphs, switching network 113 includes a regulation mechanism for maintaining the power output of gas discharge tube 140 at a predetermined and substantially constant value.

Switching network 113 includes transistor 72 connected in feedback relation to bias control winding 48 of inverter transformer 40. This coupling allows switching of a current signal responsive to a bias signal produced. Referring to bias control winding 48 of inverter transformer 40, current entering the first end of bias control winding 48 passes through winding 48 to base element 78 of transistor 72. Transistor 72 may be of the NPN type which is commercially available and in one commercially purchased transistor, has a designation of MJE 13005.

It is to be understood that self-regulating electronic ballast system 10 is designed to provide a consistency in visual light output, as well as power input to gas discharge tube 140 by maintaining the current of collector element 74 substantially constant independent of the current gain of a particular transistor 72 used in electronic ballast system 10. It has been determined that the light output should not fluctuate more than plus or minus 3.0% while the current gain of transistors 72 used in system 10 may vary in the extreme between 10.0 and 60.0. It is to be further understood that although system 10 has been shown in the illustrated embodiment of FIG. 2 to operate a single gas discharge tube 140, the principle as herein described is general in concept and may be used in dual systems since in such cases, transistor current gains would not necessarily have to be matched by pairs. Initially a positive voltage provided to base element 78 by resistor element 53 assures a small but sufficient initiating current flow through base element 78 for initiation of conduction through transistor 72. A value of 1.2 megohms has been used successfully for resistor 53.

When transistor 72 goes into a conducting or "on" state, current from DC output line 141 is coupled to primary winding 42 of inverter transformer 40 and passes through the axis of the core of toroidal transformer 56. Such current passes through first section 46 of primary winding 42 to tap line 25 which is coupled to collector element 74 of switching transistor 72.

Current flows through transistor 72 from collector 74 to emitter element 76 and then from emitter element 76 through return line 65. The increasing collector current established by switching transistor 72 induces a voltage in bias control winding 48 which is coupled to base element 78 of transistor 72. Base current flows from base element 78 to emitter element 76 in transistor 72 to return line 65.

In completion of the circuit, the current flows through current limiting resistor 58, first winding 55 of toroid transformer 56, and base coupling capacitor 54. The series combination of elements as aforementioned creates a pulse type base drive for switching transistor 72 "on" and "off" for predetermined periods of time.

The pulse which drives transistor 72 controls the frequency of operation of the self-regulating electronic ballast system 10 shown in FIG. 2. At the terminating point of this pulse, transistor 72 goes to an "off" state since the pulse differentiation through capacitor 54 supplies a negative signal to base element 78 which is limited in value magnitude by diode 38. The energy stored in primary winding 46 of inverter transformer 40 then discharges to coupling capacitor 60 and to fluorescent or gas discharge tube 140. This current induces a voltage in bias control winding 48 which then switches transistor 72 back to an "on" state in order that the cycle may be repetitive.

Primary winding 42 of inverter transformer 40 is a tapped winding which is connected in an auto-transformer configuration such that the voltage induced in primary winding second section 44 is coupled in series relation and adds to the voltage across primary winding first section 46. The total voltage across primary winding 42 is coupled to coupling capacitor 60 which is connected in series relation with primary winding 42. Obviously, as seen in FIG. 2, coupling capacitor 60 is coupled on a first end to primary winding 42 of inverter transformer 40 and is further coupled on a second end to first filament 142 of gas discharge or fluorescent tube 140, as well as to a first end of protection capacitor 62.

Protection capacitor 62 is coupled in parallel relation with gas discharge tube 140 and in series relation to output coupling capacitor 60 in order to prevent a generation of excessive voltage values from the circuit of system 10. For purposes of the embodiment herein described, capacitor 62 may be a 0.003 microfarad, 1.0 kilovolt Mylar capacitor.

Inverter transformer 40 includes secondary windings 50 and 52 which provide a filament voltage for fluorescent tube 140. First filament drive winding 50 is coupled in parallel relation to first filament 142 of fluorescent tube 140 and second filament drive winding 52 is coupled in parallel relation to second filament 144 of gas discharge tube 140. A first end of second filament drive winding 52 is coupled to return line 65.

Thus, when coupling capacitor 60 couples the discharge voltage from primary winding 42 to first filament 142 gas discharge tube 140, a current is able to flow through gas discharge tube 140 from first filament 142 to second filament 144 and then through return line 65 back to power source 112.

The generation of induced voltages occurs as the collector current is increasing towards its maximum value, and as is clear, as the current reaches the maximum value, the rate of change is substantially zero, and thus, the induced secondary voltages are correspondingly reduced to substantially zero.

When the maximum current is reached, no transformer action takes place, and transistor 72 which was in the "on" state no longer receives base drive signals from base drive winding 48 of inverter transformer 40 and therefore transistor 72 turns to an "off" condition.

When transistor 72 is turned to an "off" state, the collector current which was flowing through first section 46 of inverter transformer primary winding 42 terminates abruptly. The rapid change in collector current induces voltages again in second section 44 of inverter transformer primary winding 42 and the corresponding secondary windings 50, 52 and 48. As is known from classical theory, the polarity of the voltages induced by the rapid collapse of the collector current is such that transformer 40 attempts to maintain the direction of the original current in winding 46. Due to the direction of current flow in windings 46 and 48 as indicated by nomenclature dots 77, the voltage induced in bias control winding 48 of inverter transformer 40 is of the opposite polarity as previously described when the collector current was flowing. Thus, a negative signal on base element 78 with respect to emitter 76 is generated and transistor 72 is switched to an "off" condition.

As has been described in previous paragraphs, this allows for a repetitive cycle with a collector current waveform which closely approximates a sawtooth, where there is a substantially linearly increasing period followed by a rapid decrease to substantially a zero value and then a substantially linearly increasing current back to the peak value.

The frequency of oscillation is determined by the combined characteristics of the core, the number of turns of first section 46 of primary winding 42, and the current flowing through first section 46 of primary winding 42. Thus, oscillation frequency is much less dependent on supply voltage than that which is known in the prior art and produces a visible light output from gas discharge tube 140 which is substantially constant and having a minimization of visual flicker even when there exists substantially large variations in supply voltage.

In one working and operable embodiment of self-regulating electronic ballast system 10, inverter transformer has a ferrite core with a 0.125 millimeter gap to reduce the likelihood that inverter transformer 42 will go into a saturating mode. Primary winding 42 is formed of 123.0 turns of number 24 wire and secondary windings 50, 52 and 48 are each 1.0 turns of number 24 wire.

Self-regulating electronic ballast system 10 makes use of the concept of a variable inductance in the form of toroidal core 27 wound with 16.0 turns in which the base current passes. Line 141 passes through the axis of the toroidal core 27 which carries the collector current of transistor 72. The direction in which current flows through the two windings is such that their respective magnetic fields are additive within toroidal core 27 of toroidal transformer 56.

Therefore, the inductance which is seen in first winding 55 of toroidal transformer 56 is a function of both the base current and the collector current multiplied by the respective turn ratios and the permeability of magnetic core 27 depends on the base and current.

In actual practice, the inductance variations of second winding 57 of toroidal transformer 56 may be neglected since second winding 57 is formed of only a single turn and winding 57 inductance is relatively low as well as coupled in series with the inductance of first section 46 of primary winding 42. The inductance of second winding 57 has been found not to be significant when compared with the inductance of first section 46 of primary winding 42 which is substantially larger in absolute value.

In order to insure oscillation within self-regulating electronic ballast system 10 of switching transistor 72, bias control winding 48 is specifically designed to supply sufficient voltage to turn "on" transistor 72 of the lowest gain which may be expected to be obtained from a manufacturer of these systems. In this manner, it is assured that transistor 72 will go to an "on" state and reach saturation and thus, the base to emitter voltage will be at least the 0.7 volts required to switch transistor 72 to the saturation state.

Regardless of the gain of transistor 72 used in self-regulating electronic ballast system 10, the collector voltage and collector circuit impedance is substantially the same and thus, the substantially same collector current will flow whether a transistor with a gain of 10.0 or 50.0 is being utilized. Therefore, since the base current is a function of the collector current divided by the gain of transistor 72, it is seen that the base current must change if a transistor 72 of different gain value is to be used and function properly in self-regulating electronic ballast system 10. Where the base current changes, then an electronic element in the base circuit must change its impedance value which is the function of self-regulating circuit 17 and primarily first winding 55 of toroidal transformer 56.

In order to achieve self-regulation, the design of toroidal transformer 56 is such that the maximum permeability of core 27 is reached with a transistor whose gain is at a maximum expected value. Likewise, the inductance of first winding 55 of toroidal transformer 56 will therefore be at a maximum and hence a minimum current will flow through the base circuit for transistor 72.

The impedance of a winding having a magnetic core is related to the number of turns of the winding and current flowing therethrough as well as inversely to the length of the magnetic path in the core. The point of operation may be adjusted by either changing the size of the toroid or by inserting parallel resistor 51 in parallel relation with toroid first winding 55 for adjustment of the corresponding exciting field. A value of 270.0 ohms has been successfully used for parallel resistor 51.

Thus, with first winding 55 of toroidal transformer 56 being at a maximum value of inductance, its impedance is significantly larger than the impedance of current limiting resistor 58 and base coupling capacitor 54 such that the controlling factor is limiting the current to base element 78 of transistor 72. With transistor 72 having a maximum gain value, little current is needed and for example, if the gain or beta of transistor 72 is 50.0, then it is seen that the base current is 1/50th of the collector current.

However, the voltage induced in base drive winding 48 has been designed to turn "on" a transistor of lower gain and therefore, there is excess energy to be dissipated in the base circuit of transistor 72. The excess energy is stored in first winding 55 of toroidal transformer 56. This impedance of first winding 55 is primarily inductive as opposed to resistive, and there is little dissipation in the form of heat, and thus, there is provided an efficient means of dissipating the excess energy which is liberated when transistor 72 is in an "off" state.

In opposition, when a transistor of low gain is used in self-regulating electronic ballast system 10, the base current obviously must increase and the permeability of core 27 of toroidal transformer 56 shifts in a downward direction to a lower value than would be measured for a high gain transistor and the inductance is less than was seen with a high gain transistor. Thus, a series impedance is reduced which allows a greater base current to flow and compensates for the lower gain transistor 72 being used in system 10.

Hence, there is provided a variable inductance in first winding 55 of toroidal transformer 56 which is essentially the self-regulating element and allows sufficient base current to switch transistor 72 to an "on" state regardless of the gain or beta of transistor 72. In this manner, the output of self-regulating electronic ballast system 10 remains relatively constant within a ±3.0% margin when comparing one system to another with extreme efficiency and without unnecessary dissipation of excess heat.

## Claims

1. A gain-controlled electronic ballast system for a gas discharge tube, comprising:

   filter means (111) connectable to a power source (112,118) to provide a smoothed DC supply voltage (across 136,130);

   a transformer (115) having an autotransformer winding (182;46;44) having an input tap (190;25), and an output tap (137;42) connectable to the gas discharge tube;

   controllable switching means (113) for applying the DC supply voltage to the input tap of the autotransformer winding; and

   a control circuit for controlling the switching means to apply the DC supply voltage to the input tap at a predetermined frequency with breaking of the application of the DC supply voltage being at a rapid rate so that the autotransformer winding acts as a induction coil;

   characterised in that:

   the control circuit includes a secondary winding (143;48) of the transformer in which a current is induced to control the switching means.

2. A system according to claim 1, characterised in that the switching means (113) includes at least one transistor (170,170';72) having a base element (172,172';78), a collector element (174,174';74) and an emitter element (176,176';76) for said driving current, said base element (172,172';78) being coupled to said secondary switching control winding (143;48) of said transformer (115).

3. A system according to claim 2, characterised in that the control circuit includes regulation means (17) for maintaining the power output of said gas discharge tube (140) at a predetermined and substantially constant value, said regulation means being connected between said transformer (115) and said transistor (72) in series relation, and in coupled relation with said emitter and base elements (76,78) of said transistor.

4. A system according to claim 3, characterised in that the regulation means (17) includes a toroidal transformer (56) for providing a predetermined variable inductance for regulating said power output to said gas discharge tube (140), said toroidal transformer (56) having first and second transformer windings, where said first winding (55) has a greater number of turns than said second winding (57).

5. A system according to claim 4, characterised in that said regulation means (17) includes:

   (a) a base coupling capacitor (54) connected in series relation between a first end of said toroidal transformer winding (55) and a first end of said switching control secondary winding (48) of said transformer (115) for substantially blocking a direct current component signal; and
   (b) a current limiting resistor (58) coupled in series relation with a second end of said first winding (55) of said toroidal transformer (56) and said emitter element (76) of said transistor (72) for limiting a current value input to said base element (78) of said transistor means when said toroidal transformer first winding inductance is at a substantially minimum value.

6. A system according to claim 4 or 5, characterised in that said toroidal transformer (56) includes a toroidal core of ferrite material for varying the inductance in said first winding (55) of said toroidal transformer responsive to a particular gain value of said transistor (72); said first and second toroidal transformer windings (55,57) each of which having a predetermined number of turns are wound in a manner that the respective magnetic flux of said first and second windings is additive within said toroidal core, said first and second winding magnetic fluxes being generated by said base element current and said collector element current.

7. A system according to claim 2, characterised in that a pair of said transistors (170,170') are provided.

8. A system according to claim 7, characterised by:

(a) a centre-tapped pair of said autotransformer windings (194,198);
(b) an automatic gain control means comprising a pair of gain control secondary windings (180,181) of the transformer (115), which gain control windings (180,181) are coupled to the respective emitter elements (176,176') of the pair of transistors (170,170');
(c) a pair of coupling capacitors (186,188) connected in series relation between respective output taps (137,139) of the autotransformer windings (194,198) and respective gas discharge tubes (140,140'); and
(d) a tuning capacitor (135) coupled between the collector elements (174,174') of said transistors (170,170'); said tuning capacitor being arranged to prevent generation of excessive voltage when one of said gas discharge tubes is removed from the circuit.

9. A system according to claim 8, characterised in that the autotransformer windings (194,198) are tapped in a manner to provide a step down auto-transformer configuration, one of said pair of autotransformer windings (194,198) passing a current on alternate half cycles of said predetermined frequency relative to the other of said autotransformer windings.

10. A system according to claim 9, characterised in that the pair of gain control secondary windings (180,181) are wound in a predetermined manner for shifting the operating point on the hysteresis curve of said transformer to regulate the gain of the pair of transistors (170,170').

11. A system according to claim 10, characterised in that the gain control secondary windings (180,181) are wound in the same direction as the autotransformer windings (194,198).

## Revendications

1. Système de ballast électronique à réglage de gain pour un tube à décharges à gaz, du type comprenant :
un moyen formant filtre (111) connectable à une source de courant (112, 118) pour créer une tension continue filtrée (entre 136 et 130) ;
un transformateur (115) comportant un enroulement autotransformateur (182; 46; 44) ayant une prise d'entrée (190; 25), et une prise de sortie (137; 42) connectable au tube à décharges à gaz ;
un moyen de commutation (113) pouvant être commandé pour appliquer la tension d'alimentation continue à la prise d'entrée de l'enroulement autotransformateur ; et
un circuit de commande pour commander le moyen de commutation pour appliquer la tension d'alimentation continue à la prise d'entrée à une fréquence prédéterminée, une rupture dans l'application de la tension d'alimentation continue se produisant à une vitesse rapide de sorte que l'enroulement autotransformateur réagit comme une bobine d'induction ;
caractérisé en ce que :
le circuit de commande comprend un enroulement secondaire (143; 48) du transformateur dans lequel un courant est induit pour commander le moyen de commutation.

2. Système selon la revendication 1, caractérisé en ce que le moyen de commutation (113) comprend au moins un transistor (170, 170'; 72) comportant un élément base (172, 172'; 78) un élément collecteur (174, 174'; 74) et un élément émetteur (176, 176'; 76) pour ledit courant de commande, ledit élément base (172, 172'; 78) étant connecté audit enroulement secondaire de commande de commutation (143; 48) dudit transformateur (115).

3. Système selon la revendication 2, caractérisé en ce que ledit circuit de commande comprend un moyen de régulation (17) pour maintenir la sortie de puissance dudit tube à décharges à gaz (140) à une valeur prédéterminée et sensiblement constante, ledit moyen de régulation étant connecté entre ledit transformateur (115) et ledit transistor (72) en série et étant connecté avec lesdits éléments émetteur et base (76, 78) dudit transistor.

4. Système selon la revendication 3, caractérisé en ce que le moyen de régulation (17) comprend un transformateur toroïdal (56) pour fournir une inductance variable prédéterminée pour la régulation de ladite sortie de puissance vers le tube à décharges à gaz (140), le transformateur toroïdal (56) comportant des premier et second enroulements transformateurs, dans lesquels ledit premier enroulement (55) possède un nombre de tours plus grand que le second enroulement (57).

5. Système selon la revendication 4, caractérisé en ce que ledit moyen de régulation (17) comprend :

    (a) un condensateur de couplage de base connecté en série entre une première extrémité dudit enroulement transformateur toroïdal (55) et une première extrémité dudit enroulement secondaire de commande de commutation (48) dudit transformateur (115) pour bloquer de manière substantielle un signal de composante de courant direct ; et

    (b) une résistance de limitation de courant (58) connectée en série avec seconde extrémité dudit premier enroulement (55) dudit transformateur toroïdal (56) et ledit élément émetteur (76) dudit transistor (72) pour limiter une valeur de courant entrée dans ledit élément base (78) dudit moyen de transistor lorsque ladite inductance du premier enroulement de transformateur toroïdal est à une valeur sensiblement minimale.

6. Système selon la revendication 4 ou la revendication 5, caractérisé en ce que ledit transformateur toroïdal (56) comprend un noyau toroïdal de matériau ferrite pour modifier l'inductance dans ledit premier enroulement (55) dudit transformateur toroïdal (56) en réponse à une valeur de gain particulière dudit transistor (72); en ce que lesdits premier et second enroulements transformateurs toroïdaux (55, 57), dont chacun possède un nombre de tours prédéterminé, sont enroulés de manière à ce que le flux magnétique respectif desdits premier et second enroulements soient additifs dans ledit noyau toroïdal, lesdits flux magnétiques des premier et second enroulements étant produits par ledit courant de l'élément base et ledit courant de l'élément collecteur.

7. Système selon la revendication 2, caractérisé en ce qu'une paire desdits transistors (170, 170') est prévue.

8. Système selon la revendication 7, caractérisé par :

    (a) une paire d'enroulements autotransformateurs (194, 198) à prises médianes ;

    (b) un moyen de commande automatique de gain comprenant une paire d'enroulements de réglage de gain (180, 181) du transformateur (115), lesquels enroulements de réglage de gain (180, 181) sont connectés aux éléments émetteurs respectifs (176, 176') de la paire de transistors (170, 170');

    (c) une paire de condensateurs de couplage (186, 188) connectée en série entre les prises respectives de sortie (137, 139) des enroulements autotransformateurs (194, 198) et les tubes à décharges à gaz respectifs (140, 140') ; et

    (d) un condensateur d'accord (135) connecté entre les éléments collecteurs (174, 174') desdits transistors (170, 170') ; ledit condensateur d'accord étant disposé de manière à empêcher la production d'une tension excessive lorsque l'un desdits tubes à décharges à gaz est retiré du circuit.

9. Système selon la revendication 8, caractérisé en ce que les enroulements autotransformateurs (194, 198) sont équipés de prises de manière à créer une configuration d'autotransformateur d'abaissement de tension, l'un de ladite paire d'enroulements autotransformateurs (194, 198) laissant passer un courant pendant des demi cycles en alternance de ladite fréquence prédéterminée par rapport à l'autre desdits enroulements autotransformateurs.

10. Systèmes selon la revendication 9, caractérisé en ce que la paire d'enroulements secondaires de réglage de gain (180, 181) est bobinée d'une manière prédéterminée pour déplacer le point de fonctionnement sur la courbe d'hystérésis dudit transformateur pour réguler le gain de la paire de transistors (170, 170').

11. Système selon la revendication 10, caractérisé en ce que les enroulements secondaires de réglage de gain (180, 181) sont bobinés dans le même sens que les enroulements autotransformateurs (194, 198).

**Patentansprüche**

1. Verstärkungsgeregeltes elektronisches Ballastsystem für eine Gasentladungsröhre mit:

    einer Filtereinrichtung (111), welche an eine Energiequelle (112, 118) anschlleßar ist, um eine geglättete Gleichstromversorgungspannung (über 136, 130) bereitzustellen;

einem Transformator (115), der eine Autotransformatorwicklung (182; 46; 44) hat mit einem Eingangsanschluß (190; 25) und einem Ausgangsanschluß (137: 42), der mit der Gasentladungsröhre verbindbar ist ;

einer regelbaren Schalteinrichtung (113), um die Gleichstromversorgungsspannung dem Eingandsanschluß der Autotransformatorwicklung zuzuführen; und

einem Steuerschaltkreis zum Regeln der Schalteinrichtung, um die Gleichstromversorgungsspannung dem Eingangsanschluß mit einer vorbestimmten Frequenz zuzuführen unter Unterbrechung der Zufuhr der Gleichstromversorgungspannung mit einer schnellen Rate, so daß die Autotransformatorwicklung als eine Induktionsspule wirkt,

dadurch gekennzeichnet, daß

der Steuerschaltkreis eine Sekundärwicklung (143; 48) des Transformators aufweist, in welcher ein Strom induziert wird, um die Schalteinrichtung zu steuem.

2. System nach Anspruch 1, dadurch gekennzeichnet, daß die Schalteinrichtung (113) zumindest einen Transistor (170, 170'; 72) aufweist, der ein Basiselement (172, 172'; 78), ein Kollektorelement (174, 174'; 74) und ein Emitterelement (176, 176'; 76) für den Steuerstrom hat, wobei das Basiselement(172, 172'; 78) an die sekundäre Schaltsteuerwicklung (143: 48) des Transformators (115) angeschlossen ist.

3. System nach Anspruch 2, dadurch gekennzeichnet daß der Steuerschaltkreis eine Regeleinrichtung (17) zum Aufrechterhalten der Energieabgabe der Gasentladungsröhre (140) auf einem vorbestimmten und im wesentlichen konstanten Wert aufweist, wobei die Regeleinrichtung zwischen den Transformator (115) und den Transistor (72) in Reihe geschaltet und mit dem Emitter- und dem Basiselement (76, 78) des Transistors verbunden ist.

4. System nach Anspruch 3, dadurch gekennzeichnet, daß die Regeleinrichtung (17) einen Ringkerntransformator (58) aufweist, um eine vorbestimmte variable induktivität bereitzustellen, um die Energieabgabe an die Gasentladungsröhre (140) zu regulieren, wobei der Ringkerntransformator (56) erste und zweite Transformatorwicklungen hat, wobei die erste Wicklung (55) eine größere Anzahl von Windungen hat als die zweite Wicklung (57).

5. System nach Anspruch 4, dadurch gekennzeichnet, daß die Regeleinrichtung (17) aufweist.

a) einen Basiskopplungskondensator (54), der in Reihenschaltung zwischen einem ersten Ende der Ringkerntransformatorwicklung (55) und einem ersten Ende der Sekundärwicklung (48) der Schaltsteuerung des Transformators (115) liegt, um eine Signalkomponente eines direkten Stromes im wesentlichen zu sperren, und
b) einen Strombegrenzungswiderstand (58), der in Reihenschaltung mit einem ersten Ende der ersten Wicklung (55) das Ringkerntransformators (56) und dem Emitterelement (76) des Transistors (72) verbunden ist, um einen Stromeingangswert zu dem Basiselement (78) der Transistoreinrichtung zu begrenzen, wenn die induktivität der ersten Windung des Ringkerntransformators auf einem im wesentlichen minimalen Wert ist.

6. System nach Anspruch 4 oder 5, dadurch gekennzeichnet, daß der Ringkerntransformator (56) einen Ringkern aus Ferritmaterial aufweist, um die induktivität in der ersten Wicklung (55) des Ringkerntransformators unter Ansprechen auf einen bestimmten Verstärkungswert des Transistors (72) zu verändern, wobei die ersten und zweiten Wicklungen (55, 57) des Ringkemtransformators, die jeweils eine vorbestimmte Anzahl von Windungen haben, in einer Art und Weise gewickelt sind, daß der entsprechende magnetische Fluß der ersten und zweiten Wicklungen innerhalb des Ringkernes additiv ist, wobei der magnetische Fluß der ersten und zweiten Wicklung durch den Strom des Basiselementes und den Strom des Kollektorelementes erzeugt wird.

7. System nach Anspruch 2, dadurch gekennzeichnet, daß ein Paar von Transistoren(170, 170') vorgesehen ist.

8. System nach Anspruch 7, gekennzeichnet durch:

a) ein Paar der Autotransformatorwicklungen (194, 198) mit Mittenabgriff;
b) eine automatischen Verstärkungsregeleinrichtung, welche ein Paar von Sekundärwicklungen (180, 181) des Transformators (115) zur Verstärkungsregelung aufweist, wobei die Verstärkungsregelwicklungen (180, 181) mit den entsprechenden Emitterelementen (176, 176') des Paares von Transistoren (170, 170') verbunden sind;

13

c) ein Paar von Kopplungskondensatoren (186, 188), welche in Reihenschaltung zwischen entsprechenden Ausgangsabgriffen (137, 139) der Autotransformatorwicklungen (194, 198) und entsprechenden Gasentladungsröhren (140, 140') liegen; und

d) einen Abstimmkondensator (135), welcher zwischen den Kollektorelementen (174, 174') der Transistoren (170, 170') angeschlossen ist, wobei der Abstimmkondensator so angeordnet ist, daß er die Erzeugung einer übermäßig großen Spannung verhindert, wenn eine der Gasentladungsröhren aus dem Schaltkreis entfernt wird.

9. System nach Anspruch 8, dadurch gekennzeichnet, daß die Autotransformatorwicklungen (194, 198) in einer Art und Weise abgegriffen werden, daß sie einen Autotransformatoraufbau mit Herabtransformierung (stepdown) bereitstellen, wobei eines der Paare von Autotransformatorwicklungen (194, 198) einen Strom eines Halbzyklus von abwechseinden Zyklen der vorbestimmten Frequenz relativ zu der anderen der Autotransformatorwicklungen hindurchläßt.

10. System nach Anspruch 9, dadurch gekennzeichnet, daß das Paar von Sekundärwicklungen (180, 181) der Verstärkungsregelung in einer vorbestimmten Weise gewickelt sind, um den Betriebspunkt auf der Hysteresekurve des Transformators zu verschieben, um die Verstärkung des Paares von Transistoren (170, 170') zu regeln.

11. System nach Anspruch 10, dadurch gekennzeichnet, daß die Sekundärwicklungen (180, 181) der Verstärkungsregelung in derselben Richtung wie die Autotransformatorwicklungen (194, 198) gewickelt sind.

Fig. 1

Fig. 2